# EUROPEAN PATENT APPLICATION

(11) **EP 4 411 370 A2**
(43) Date of publication of application: **07.08.2024**
(21) Application number: 24155453.4
(22) Date of filing: 02.02.2024
(51) Int. Cl.: G01N 30/88, G01N 35/00, G01N 30/72

(54) **TRAINED NEURAL NETWORK MODEL TO DETERMINE CARTRIDGE AND SYSTEM HEALTH**

(30) Priority: 03.02.2023 US 202363483154 P
(71) Applicant: Thermo Finnigan LLC, San Jose, CA 95134 (US)
(72) Inventor: WOUTERS, Eloy R., San Jose, CA (US); SILVEIRA, Joshua A., Gilroy, CA (US); SCHULTZ, Gary, Ithaca, CA (US)
(74) Representative: Boult Wade Tennant LLP

(57) **Abstract**

Disclosed herein are scientific instrument support systems, as well as related methods, computing devices, and computer-readable media. For example, in some embodiments, a chromatography instrument support apparatus may include: first logic to receive, from an imaging device, image data regarding chromatography instrumentation; second logic to determine a state of the chromatography instrumentation by processing the imaging device through a machine-learning computational model; and third logic to display the state of the chromatography instrumentation.

## Description

### Background

Scientific instruments may include a complex arrangement of movable components, sensors, input and output ports, energy sources, and consumable components. Failures or changes in any part of this arrangement may result in a "downed" instrument, one that is not able to perform its intended function.

### Summary

The present disclosure provides systems and methods to determine the status, or health, of a complete Liquid-Chromatography Mass Spectrometry (LC/MS) system prior to the injection of a sample for test or analysis.

In one embodiment, the present disclosure provides a chromatography support apparatus comprising first logic to receive, from an imaging device, image data regarding chromatography instrumentation, second logic to determine a state of the chromatography instrumentation by processing the imaging device through a machine-learning computational model, and third logic to display the state of the chromatography instrumentation.

In another embodiment, the present disclosure provides a chromatography support apparatus comprising first logic, second logic, and third logic. The first logic is to receive a command to train a machine-learning computational model, wherein the command includes an identification of multiple image data sets or diagnostic and trending data sets for training the machine-learning computational model. The second logic is to initially train the machine-learning computational model based on the multiple image data sets or the diagnostic and the trending data sets, wherein the machine-learning computational model is to output a state of chromatography instrumentation. The third logic is to provide, after initial training, an option to select the machine-learning computational model for application to a subsequent image data set or the diagnostic and trending data set.

In yet another embodiment, the present disclosure provides a chromatography support apparatus comprising a first logic, a second logic, and a third logic. The first logic is to receive diagnostic and trending data regarding chromatography instrumentation collected during operation of the chromatography instrumentation. The second logic is to determine a state of the chromatography instrumentation by processing the diagnostic and trending data through a machine-learning computational model. The third logic is to display the state of the chromatography instrumentation.
Further aspects of the present disclosure as set forth in the following numbered clauses:-
Clause 1. A chromatography support apparatus, comprising:
   first logic to receive, from an imaging device, image data regarding chromatography instrumentation;
   second logic to determine a state of the chromatography instrumentation by processing the imaging device through a machine-learning computational model; and
   third logic to display the state of the chromatography instrumentation.
Clause 2. The chromatography support apparatus of clause 1, wherein the machine-learning computational model comprises a trained neural network.
Clause 3. The chromatography support apparatus of clause 2, wherein the machine-learning computational model comprises a trained feed forward neural network.
Clause 4. The chromatography support apparatus of clause 1, wherein the imaging device comprises a camera.
Clause 5. A chromatography support apparatus, comprising:
   first logic to receive a command to train a machine-learning computational model, wherein the command includes an identification of multiple image data sets or diagnostic and trending data sets for training the machine-learning computational model;
   second logic to initially train the machine-learning computational model based on the multiple image data sets or the diagnostic and the trending data sets, wherein the machine-learning computational model is to output a state of chromatography instrumentation; and
   third logic to provide, after initial training, an option to select the machine-learning computational model for application to a subsequent image data set or the diagnostic and trending data set.
Clause 6. The chromatography support apparatus of clause 5, wherein the machine-learning computational model is a first machine-learning computational model, wherein the first logic is to receive a command to train a second machine-learning computational model, wherein the command includes an identification of multiple image data sets or the diagnostic and the trending data sets for training the second machine-learning computational model.
Clause 7. A chromatography support apparatus, comprising:
   first logic to receive diagnostic and trending data regarding chromatography instrumentation collected during operation of the chromatography instrumentation;
   second logic to determine a state of the chromatography instrumentation by processing the diagnostic and trending data through a machine-learning computational model; and
   third logic to display the state of the chromatography instrumentation.
Clause 8. The chromatography support apparatus of clause 7, wherein the state of the chromatography instrumentation includes the health of the chromatography instrumentation.
Clause 9. The chromatography support apparatus of clause 7, wherein the state of the chromatography instrumentation is determined based on a peak width of analytes, stability of retention time, peak area, or carryover of other signals relative to analytes.
Clause 10. The chromatography support apparatus of clause 7, comprising fourth logic to cause halting an operation of the chromatography instrumentation based on the state of the chromatography instrumentation.

### Brief Description of the Drawings

Embodiments will be readily understood by the following detailed description in conjunction with the accompanying drawings. To facilitate this description, like reference numerals designate like structural elements. Embodiments are illustrated by way of example, not by way of limitation, in the figures of the accompanying drawings.
FIG. 1 is a block diagram of an example chromatography instrument support module for determining a state of chromatography instrumentation, in accordance with various embodiments.
FIG. 2A is a flow diagram of an example method to determine a state of chromatography instrumentation based on image data, in accordance with various embodiments.
FIG. 2B is a flow diagram of an example method of generating and selecting a machine-learning computational model for determining a state of chromatography instrumentation, in accordance with various embodiments.
FIG. 2C is a flow diagram of an example method to determine a state of chromatography instrumentation based on diagnostic and trending data, in accordance with various embodiments.
FIGS. 3A and 3B depict various instrumentation, which include a mass spectrometer inlet, that can be employed within the described system.
FIGS. 4A-4C each depict a partial spindle-type electrospray plume converting into a cone-jet plume as voltage is increased.
FIG. 4D depicts a graph where the spray current leaving the post-column union is plotted as a function of the applied voltage.
FIGS. 5A and 5B depict a graph of a current-voltage characteristic curve (I-V Curve) and its derivative respectively, that may be employed to characterize and determine the health of electrospray emitters.
FIGS. 6A-6D depict charts showing an onset voltage plotted as a function of the number of injections on the cartridge.
FIGS. 6E and 6F depict an emitter before and after deposits on the external surface were visibly removed.
FIGS. 7A and 7B each depict an electrospray emitter.
FIG. 8A depicts a heatmap showing the correlation coefficients from a linear regression analysis of factors that impact cartridge performance.
FIGS. 8B-8G depict charts showing conditions leading to premature emitter degradation and performance loss.
FIG. 9 depicts a chart showing the total ion current (TIC) as a function of retention time.
FIG. 10 depicts a chart showing an example of spray current detecting instability in the TIC during the gradient.
FIG. 11 depicts a chart showing spray current as a function of retention time.
FIG. 12. depicts a chart showing backpressure trends as a function of retention time.
FIG. 13 is an example of a graphical user interface that may be used in the performance of some or all of the support methods disclosed herein, in accordance with various embodiments.
FIG. 14 is a block diagram of an example computing device that may perform some or all of the scientific instrument support methods disclosed herein, in accordance with various embodiments.
FIG. 15 is a block diagram of an example scientific instrument support system in which some or all of the scientific instrument support methods disclosed herein may be performed, in accordance with various embodiments.

### Detailed Description

Disclosed herein are scientific instrument support systems, as well as related methods, computing devices, and computer-readable media. For example, in some embodiments, a chromatography instrument support apparatus may include: first logic to receive, from an imaging device, image data regarding chromatography instrumentation; second logic to determine a state of the chromatography instrumentation by processing the imaging device through a machine-learning computational model; and third logic to display the state of the chromatography instrumentation.

The scientific instrument support embodiments disclosed herein may achieve improved performance relative to conventional approaches. As discussed in further detail below, from a customer point of view, the primary requirement of a Liquid-Chromatography Mass Spectrometry (LC/MS) system is to successfully carry out sample analysis and in the event of instrument malfunction, never waste a precious, irreplaceable sample. Hence, there exists a need for systems and methods to determine the status, or health, of the complete LC/MS system prior to the injection of the sample. In some embodiments, elements of an LC/MS system include a chromatographic column and an electrospray emitter. In some embodiments, the described liquid chromatography system employs a liquid chromatograph and a mass spectrometer to determine and reports a status for these elements to a user.

In some embodiments, the chromatographic column and electrospray emitter are combined to form a "packed tip" or are co-located in a cartridge. In some embodiments, the cartridge is configured to heat the respective chromatographic column. In some embodiments, the liquid flow rate is between tens of nanoliters per minute to several tens of milliliters per minute. In some embodiments, the electrospray emitter is metal or glass (e.g., fused silica) with or without a metal coating.

In some embodiments, the chromatographic column and the electrospray emitter (or a cartridge including both) are a consumable with a limited lifetime (e.g., hundreds of sample injections). In some embodiments, the liquid chromatography system includes seals with limited lifetime (e.g., several months to over a year) that require preventative maintenance. In some embodiments, the mass spectrometer needs periodic cleaning-the frequency of which is dependent on the types of samples that are analyzed.

Accordingly, the chromatography instrument support embodiments disclosed herein may include deep learning technique with a feed forward neural network employed to processes data collected from previous injections to establish whether the system still capable of generating meaningful results. In some embodiments, the described liquid chromatography system determines results based on specific elements in the system as well as a holistic view of the collected data processed through the trained model. The embodiments disclosed herein thus provide improvements to scientific instrument technology (e.g., improvements in the computer technology supporting such scientific instruments, among other improvements).

In some embodiments, the described system injects a specific calibration mixture (e.g., a Pierce TM Retention Time Calibration (PRTC) mixture) between sample runs, to establish, with a shortened gradient program, if the LC/MS system is behaving as expected. In some embodiments, the system provides metrics such as column back pressure consistency between sample injections, the spray current, the stability of the retention time, peak areas, and the peak width of certain known MS signals. In some embodiments, the provided metrics include the abundance or other unknown species relative to PRTC, which is used to assess carryover.

In some embodiments, the described system determines the variation of the MS signal of a certain solvent ion while the LC is pumping an isocratic flow. In some embodiments, the described system determines the health of the chromatographic column by monitoring of the LC pumps backpressure traces. In some embodiments, in addition to LC pump backpressure monitoring across a sequence of sample analyses, the described system determines the health of the chromatographic column by monitoring chromatographic peak shape (e.g., width, asymmetry), peak retention time, column (e.g., the cartridge) temperature accuracy and stability, and the like. From an emitter perspective, with continuous emitter imaging via a camera, the system may also monitor physical changes in the emitter as it is in use. In some embodiments, the described system also monitors the current-voltage relationship over time and across a chromatographic gradient.

In some embodiments, the described system employs machine learning (e.g., via a trained neural network) to determine qualitative changes of behavior using functional data analysis (FDA) methods such as statistical tests of the Fréchet distance, dynamic time warping (DTW) distance, the Euclidean distance inferred from the cross-correlation, and the like. In some embodiments, the described system tracks the deterministic increase in the backpressure at salient points in the curve to determine, using Kalman filtering, extrapolation, or related techniques, when a chromatographic column is nearing the end of its life.

In some embodiments, the described system determines (e.g., at periodic time intervals or as customer use allows) the health of an electrospray emitter, which may include the collection of distributions of solvent ion signal (e.g., under standard flow and spray conditions), and may include recording the information to, for example, a cartridge memory. In some embodiments, these distributions are monitored for changes using, for example, Kolmogorov tests for identicalness of the distribution or changepoint/breakpoint analysis. In some embodiments, autocorrelations and power spectra are monitored, when the original time series of these data are maintained, to detect the development of fluttering or quasiperiodic modes of spray instability. Generally, an electrospray emitter's health refers to the physical state or condition of the system. The health of a consumable (e.g., the electrospray emitter) is expected to be a function of its use and is generally expected to degrade over time. Generally, "good health" refers to a state of being fit for analysis and the absence of functional impairment.

In some embodiments, the described system establishes the health of an electrospray emitter by measuring the electrospray current for a set or range of applied voltages or for a given mobile phase composition. From these values, in some embodiments, a slope is calculated. In some embodiments, this slope represents the inverse of the resistance in the fluidic path (and solvent contained therein) from the liquid metal junction where voltage is applied, to the emitter tip where droplets are formed. Alternatively, in some embodiments, the onset of electrospray current is established from these values. In some embodiments, the described system monitors these derived parameters as they change over the life of the electrospray emitter to establish a cut off after which the associated mass spectrometric data that is generated provides less meaningful results.

To demonstrate that the described system can differentiate electrosprays with different behavior, data was acquired on four different fused silica electrospray emitters with and without nebulization gas. Notably one of the four electrospray emitters in the study was slightly broken at the tip. Because droplet size (and thus sensitivity) is governed by the liquid wetting the outer surface at the tip, it is expected that this tip would differ in its electrospray performance. This electrospray emitter showed a significant hysteresis effect on the rising and falling curves and also required additional voltage to initiate the electrospray process. These results demonstrate that the described system is adequately sensitive to changes in spray behavior that may be used to assess emitter and/or cartridge health.

In the following detailed description, reference is made to the accompanying drawings that form a part hereof wherein like numerals designate like parts throughout, and in which is shown, by way of illustration, embodiments that may be practiced. It is to be understood that other embodiments may be utilized, and structural or logical changes may be made, without departing from the scope of the present disclosure. Therefore, the following detailed description is not to be taken in a limiting sense.

Various operations may be described as multiple discrete actions or operations in turn, in a manner that is most helpful in understanding the subject matter disclosed herein. However, the order of description should not be construed as to imply that these operations are necessarily order dependent. In particular, these operations may not be performed in the order of presentation. Operations described may be performed in a different order from the described embodiment. Various additional operations may be performed, and/or described operations may be omitted in additional embodiments.

For the purposes of the present disclosure, the phrases "A and/or B" and "A or B" mean (A), (B), or (A and B). For the purposes of the present disclosure, the phrases "A, B, and/or C" and "A, B, or C" mean (A), (B), (C), (A and B), (A and C), (B and C), or (A, B, and C). Although some elements may be referred to in the singular (e.g., "a processing device"), any appropriate elements may be represented by multiple instances of that element, and vice versa. For example, a set of operations described as performed by a processing device may be implemented with different ones of the operations performed by different processing devices.

The description uses the phrases "an embodiment," "various embodiments," and "some embodiments," each of which may refer to one or more of the same or different embodiments. Furthermore, the terms "comprising," "including," "having," and the like, as used with respect to embodiments of the present disclosure, are synonymous. When used to describe a range of dimensions, the phrase "between X and Y" represents a range that includes X and Y. As used herein, an "apparatus" may refer to any individual device, collection of devices, part of a device, or collections of parts of devices. The drawings are not necessarily to scale.

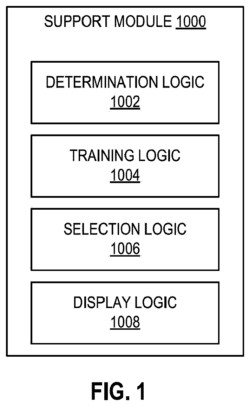

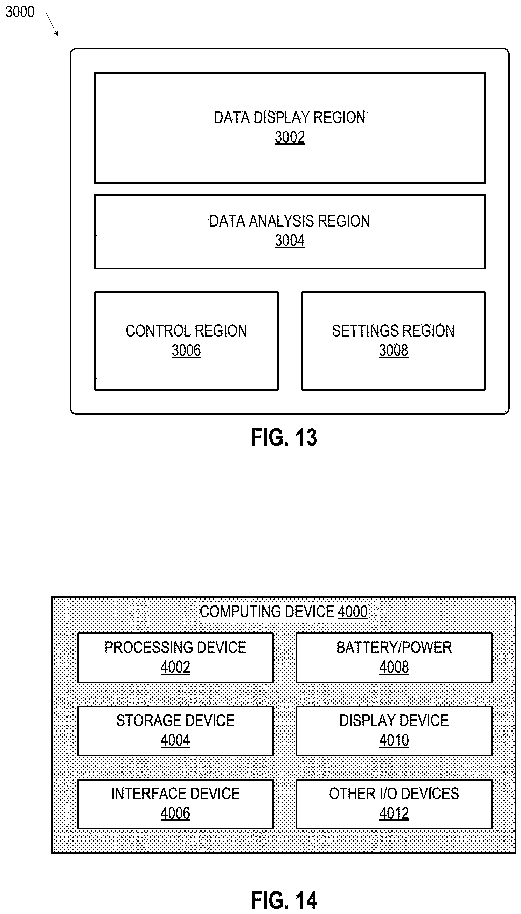

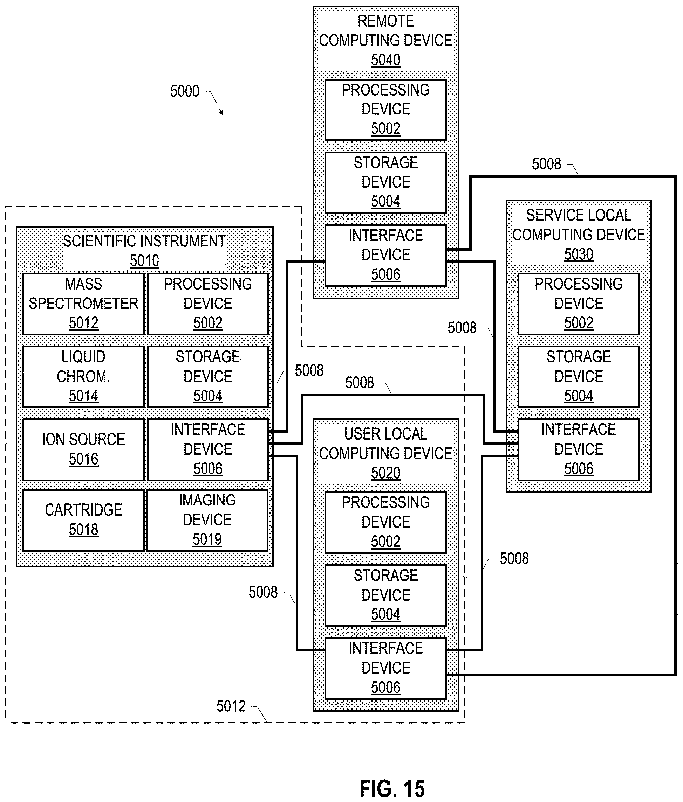

FIG. 1 is a block diagram of a scientific instrument support module 1000 for performing support operations, in accordance with various embodiments. The scientific instrument support module 1000 may be implemented by circuitry (e.g., including electrical and/or optical components), such as a programmed computing device. The logic of the scientific instrument support module 1000 may be included in a single computing device or may be distributed across multiple computing devices that are in communication with each other as appropriate. Examples of computing devices that may, singly or in combination, implement the scientific instrument support module 1000 are discussed herein with reference to the computing device 4000 of FIG. 14, and examples of systems of interconnected computing devices, in which the scientific instrument support module 1000 may be implemented across one or more of the computing devices, is discussed herein with reference to the scientific instrument support system 5000 of FIG. 15.

The chromatography instrument support module 1000 may include determination logic 1002, training logic 1004, model selection logic 1006, and display logic 1008. As used herein, the term "logic" may include an apparatus that is to perform a set of operations associated with the logic. For example, any of the logic elements included in the support module 1000 may be implemented by one or more computing devices programmed with instructions to cause one or more processing devices of the computing devices to perform the associated set of operations. In a particular embodiment, a logic element may include one or more non-transitory computer-readable media having instructions thereon that, when executed by one or more processing devices of one or more computing devices, cause the one or more computing devices to perform the associated set of operations. As used herein, the term "module" may refer to a collection of one or more logic elements that, together, perform one or more functions associated with the module. Different ones of the logic elements in a module may take the same form or may take different forms. For example, some logic in a module may be implemented by a programmed general-purpose processing device, while other logic in a module may be implemented by an application-specific integrated circuit (ASIC). In another example, different ones of the logic elements in a module may be associated with different sets of instructions executed by one or more processing devices. A module may not include all of the logic elements depicted in the associated drawing; for example, a module may include a subset of the logic elements depicted in the associated drawing when that module is to perform a subset of the operations discussed herein with reference to that module.

The determination logic 1002 may be configured to determine state of the chromatography instrumentation. The state of the chromatography instrumentation may be determined based on image data or diagnostic and trending data regarding chromatography instrumentation, such as any of the chromatography instruments discussed herein. For example, the chromatography instruments may include a mass spectrometer, a liquid chromatograph, a source, and a cartridge, among others.

In some embodiments, the determination logic 1002 employs a trained neural network to determine the state of the chromatography instrumentation. As noted above, the determination logic 1002 may include a machine-learning computational model that outputs state of the chromatography instrumentation, and that is trained on data that has been provided by an individual or institution and reflects that individual's or institution's preferences for peak and baseline identification.

In some embodiments, the machine-learning computational model may be a neural network computational model that receives, as an input, image data or diagnostic and trending data regarding chromatography instrumentation, and outputs state of the chromatography instrumentation. The architecture of the machine-learning computational model may take any of a number of forms, such as a neural network model (e.g., a convolutional neural network model). For example, the determination logic 1002 may include a machine-learning computational model with an architecture similar to that of the U-NET convolutional neural network, but with U-NET's two-dimensional convolutions (suitable for a two-dimensional input image) replaced by one-dimensional convolutions (suitable for a one-dimensional input chromatogram data array). Different kernel sizes (e.g., a kernel size between 3 and 20) and numbers of blocks (e.g., four blocks in the descending portion of the "U" of the U-NET architecture) may be used and/or adjusted as suitable. Training of the machine-learning computational model included in the determination logic 1002 is discussed further below with reference to the training logic 1004.

The training logic 1004 may be configured to initially train the machine-learning computational model used by the determination logic 1002 (e.g., on a body of training data including image data set or diagnostic and trending data sets regarding chromatography instrumentation generated manually or otherwise), and to retrain the machine-learning computational model upon the receipt of additional image data set or diagnostic and trending data sets. Any suitable training technique for machine-learning computational models may be implemented by the training logic 1004, such as a gradient descent process using suitable loss functions. In some embodiments, to retrain the machine-learning computational model, the training logic 1004 may employ dropout or other regularization methods and may reserve some of the training data for use in validation and in assessing when to stop the retraining process. The training logic 1004 may perform such retraining on a regular chronological schedule (e.g., every week), after a certain number of confirmed image data set or diagnostic and trending data sets are accumulated (e.g., 20), in accordance with any other suitable schedule, or at the command of a user (e.g., received via a GUI, such as the GUI 3000 of FIG. 13). In some embodiments, the training data for retraining of a machine-learning computational model may include a Network Common Data Format (NetCDF) file including the image data set or diagnostic and trending data sets) and a plain text file containing information about the image data set or diagnostic and trending data sets 102.

The model selection logic 1006 may be configured to provide multiple machine-learning computational models that may be selectively utilized by the determination logic 1002 to determine state of the chromatography instrumentation. For example, one machine-learning computational model may be trained for analyzing qualitative changes of behavior using FDA methods, while another machine-learning computational model may be trained for analyzing a peak width of analytes, stability of retention time, peak area, or carryover of other signals relative to analytes (and thus the different machine-learning computational models may be trained on different training data sets). The display logic 1008 may provide to a user, through a GUI (such as the GUI 3000 of FIG. 13), an option to select the machine-learning computational model that they wish to use for a particular chromatography instrumentation from a set of stored machine-learning computational models (e.g., identified with different names) made available by the model selection logic 1006, and the selected machine-learning computational model may be used by the determination logic 1002 as part of determining state of the chromatography instrumentation. The model selection logic 1006 may also provide to a user, through a GUI (such as the GUI 3000 of FIG. 13), an option to create a new machine-learning computational model; the model selection logic 1006 may prompt a user to enter a name or other identifier for the new machine-learning computational model, and to specify data that can be used to train the new machine-learning computational model. In some embodiments, the model selection logic 1006 may require a threshold amount of training data before training of a new machine-learning computational model may proceed, and once trained, the new machine-learning computational model may be available for selection via the model selection logic 1006.

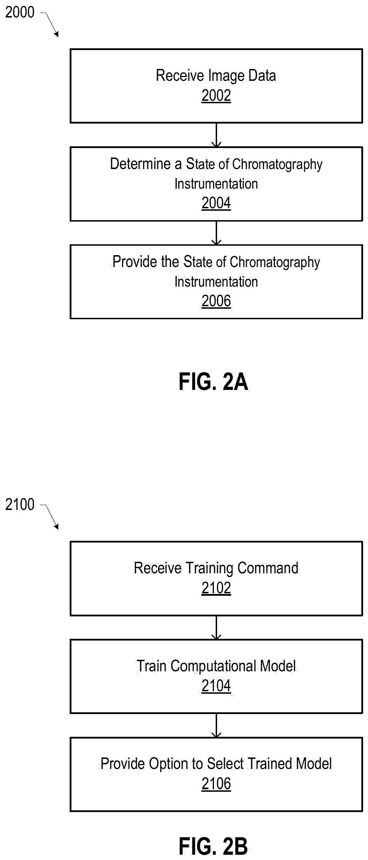

FIGS. 2A-2C each depict a flow diagram of a method 2000, 2100, and 2200, respectively, of performing support operations, in accordance with various embodiments. Although the operations of the methods 2000, 2100, and 2200 may be illustrated with reference to particular embodiments disclosed herein (e.g., the scientific instrument support modules 1000 discussed herein with reference to FIG. 1, the GUI 3000 discussed herein with reference to FIG. 13, the computing devices 4000 discussed herein with reference to FIG. 14, and/or the scientific instrument support system 5000 discussed herein with reference to FIG. 15), the methods 2000, 2100, and 2200 may be used in any suitable setting to perform any suitable support operations. Operations are illustrated once each and in a particular order in FIGS. 2A-2C, but the operations may be reordered and/or repeated as desired and appropriate (e.g., different operations performed may be performed in parallel, as suitable).

For method 2000, at 2002, first operations may be performed. For example, the support module 1000 may perform the operations of 2002 (e.g., via receiving logic not shown in FIG. 1). The first operations may include receiving, from an imaging device, image data regarding chromatography instrumentation.

At 2004, second operations may be performed. For example, the determination logic 1002 of a support module 1000 may perform the operations of 2004. The second operations may include determining a state of the chromatography instrumentation by processing the imaging device through a machine-learning computational model.

At 2006, third operations may be performed. For example, the display logic 1008 of a support module 1000 may perform the operations of 2006. The third operations may include displaying the state of the chromatography instrumentation.

For method 2100, at 2102, first operations may be performed. For example, the receiving logic (described above) of a support module 1000 may perform the operations of 2102. The first operations may include receiving a command to train a machine-learning computational model. In some embodiments, the command includes an identification of multiple image data sets or diagnostic and trending data sets for training the machine-learning computational model.

At 2104, second operations may be performed. For example, the training logic 1004 of a support module 1000 may perform the operations of 2104. The second operations may include initially training the machine-learning computational model based on the multiple image data sets or diagnostic and trending data sets. In some embodiments, the machine-learning computational model is to output a state of chromatography instrumentation.

At 2106, third operations may be performed. For example, the selection logic 1006 of a support module 1000 may perform the operations of 2106. The third operations may include providing, after initial training, an option to select the machine-learning computational model for application to a subsequent image data set or diagnostic and trending data set.

For method 2200, at 2202, first operations may be performed. For example, the receiving logic (described above) of a support module 1000 may perform the operations of 2202. The first operations may include receiving diagnostic and trending data regarding chromatography instrumentation collected during operation of the chromatography instrumentation.

At 2204, second operations may be performed. For example, the determination logic 1002 of a support module 1000 may perform the operations of 2204. The second operations may include determining a state of the chromatography instrumentation by processing the diagnostic and trending data through a machine-learning computational model.

At 2206, third operations may be performed. For example, the display logic 1008 of a support module 1000 may perform the operations of 2206. The third operations may include displaying the state of the chromatography instrumentation.

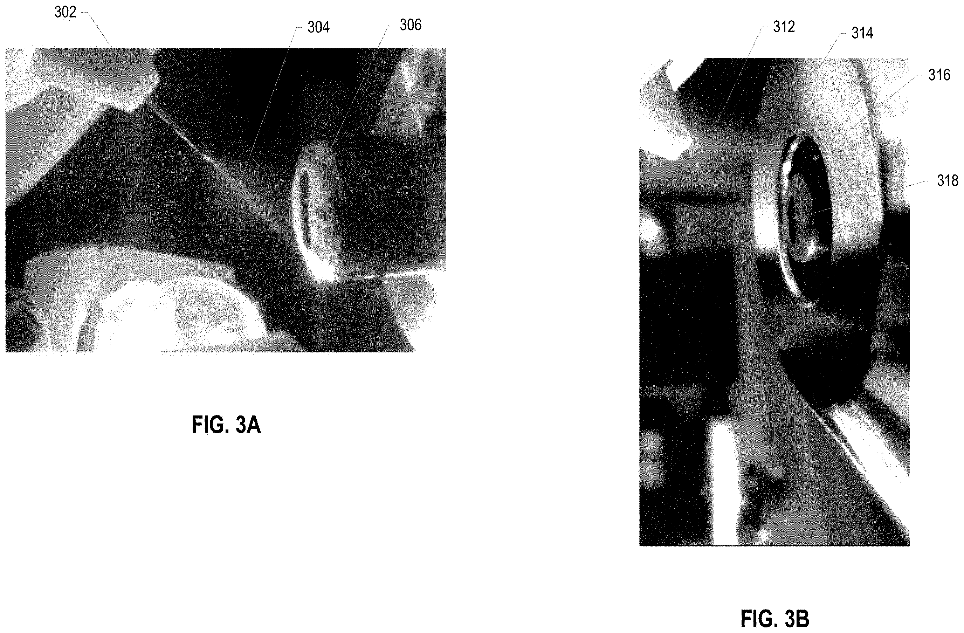

FIGS. 3A and 3B depict various instrumentation, which include a mass spectrometer inlet, that can be employed within the described system. FIG. 3A depicts an electrospray emitter 302 emitting a dual spindle electrospray plume 304 being sampled by a mass spectrometer inlet 306. FIG. 3B depicts an electrospray emitter 312 and an installation of a sweep cap 314 with an annulus region 316 surrounding a mass spectrometer inlet 318. In some embodiments, the annulus region 314 is used to provide a counter flow of gas. In some embodiments, the described system processes image data received from an imaging device (e.g., a camera) through a trained state model to determine a state of the instrumentation. This state information may include, for example, the configuration/type (e.g., the sweep cap type) or health/cleanliness of the instrumentation. In some embodiments, the determined state information is provided to a user via the GUI 3000 (FIG. 13).

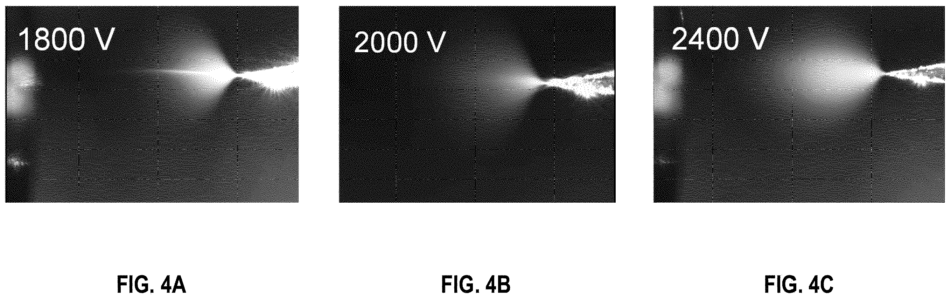

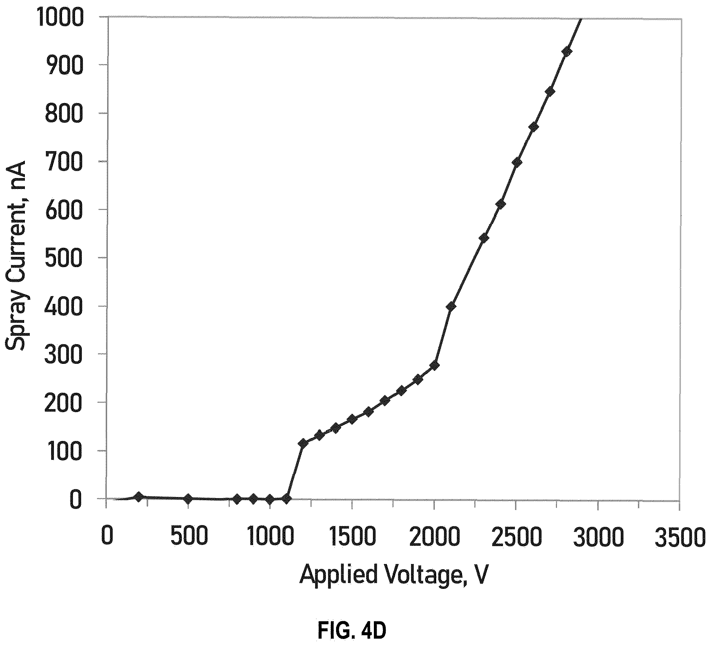

FIGS. 4A-4C each depict a partial spindle-type electrospray plume converting into a cone-jet plume as voltage is increased. FIG. 4D depicts a graph where the spray current leaving the post-column union is plotted as a function of the applied voltage. As depicted, the change in slope at ~1000 V is due to a transition from dripping to spraying whereas the change in slope at ∼2000 V is due to a transition from partial spindle to cone jet. The depicted slope is reflective of the resistance of the fluidic path from the liquid junction (which is upstream of the electrospray emitter to the actual tip). In some embodiments, the described system processes this spray data through the trained state model to determine the health (e.g., wear) of the emitter.

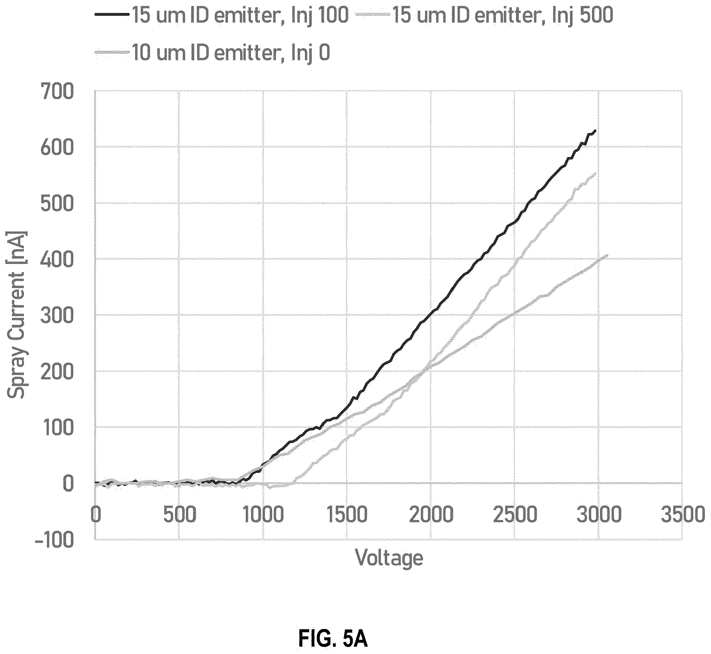

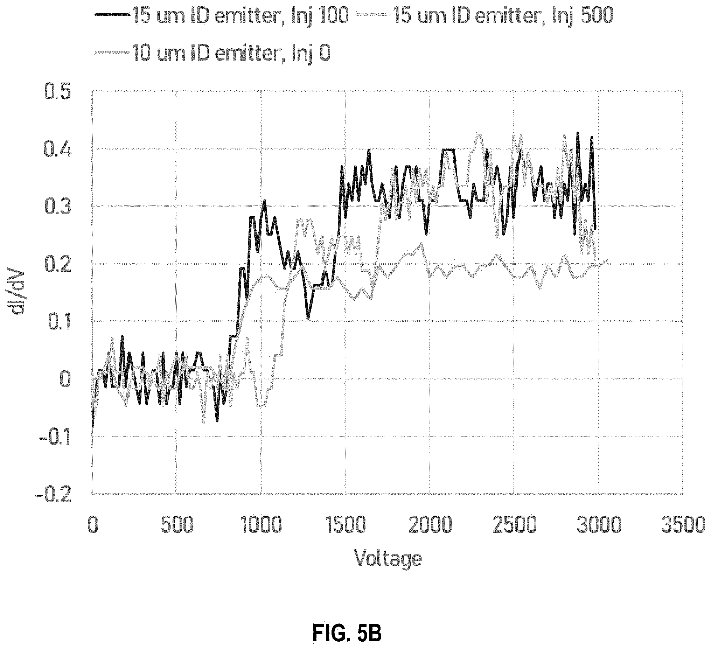

FIG 5A depicts a chart showing a falling I-V curve for a 15 um ID tapered tip emitter with 100 and 500 cumulative 1 ug HeLa injections on-column acquired with a sheath gas flow rate of ~0.5 L/min. For reference, a 10 um ID tapered tip emitter is also shown. Using a sheath gas ensures the measured slope primarily represents the resistivity in the fluidic path contained inside the body of the emitter. In all cases depicted, the solution composition was 2% acetonitrile, 0.1% formic acid in water. For the 15 um ID emitter, two distinct regions are observed in the derivative plot depicted in FIG 5B. A shift toward higher voltage requirements (which indicates an increase in the voltage necessary to break the surface tension of the liquid at the tip) is observed with cartridge age. The depicted data shows that the onset voltage provides information on the emitter tip condition whereas the slope gives the integrity of the fluidic path.

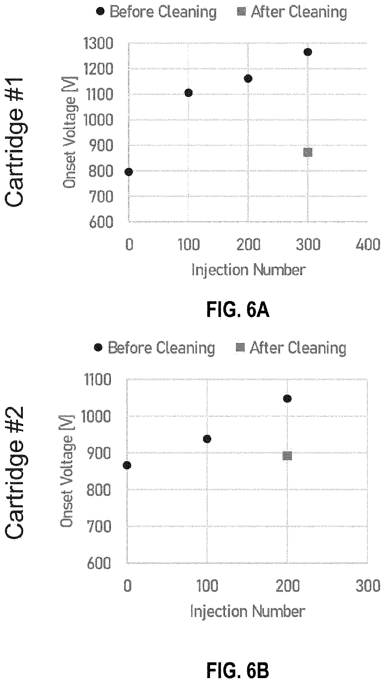

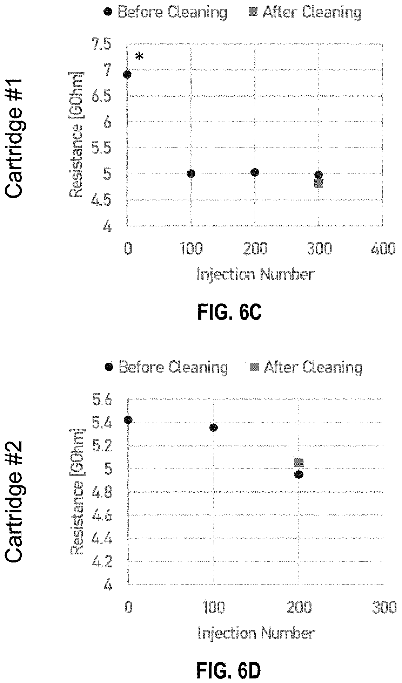

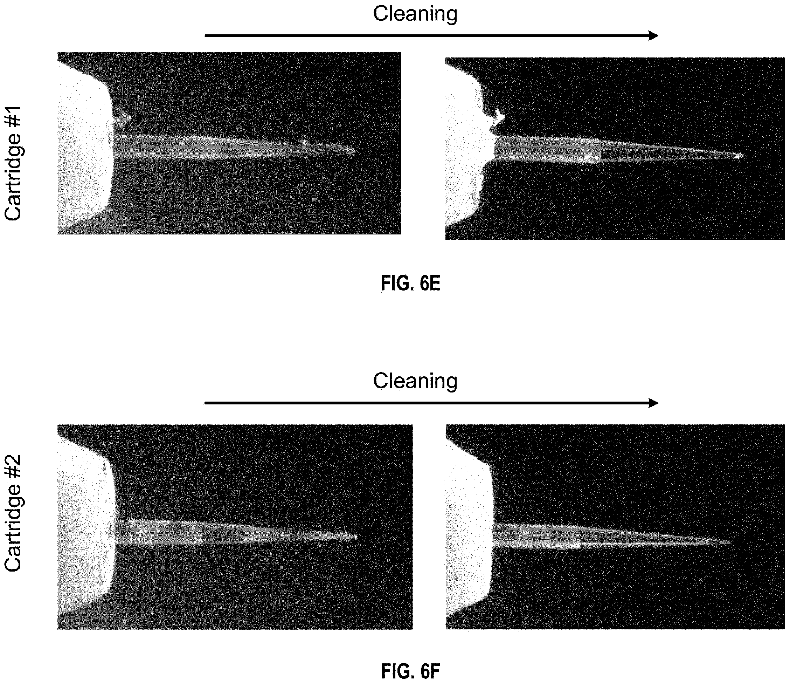

FIGS. 6A-6D depict charts showing an onset voltage plotted as a function of number of 1 ug HeLa injections on two different cartridges. At two different time points in the experiment, the emitters were each sonicated for 1 hour in an ultrasonic bath and subsequently soaked in 12 M NaOH. FIGS. 6E and 6F depicts how deposits on the external surface of the emitter were visibly removed. As expected, the resistance values shown in FIGS. 6C and 6D remained unchanged. Note: the datapoint with an asterisk is assumed to be an outlier which gave a high initial value due to a contaminant in the fluidic path that was subsequently removed.

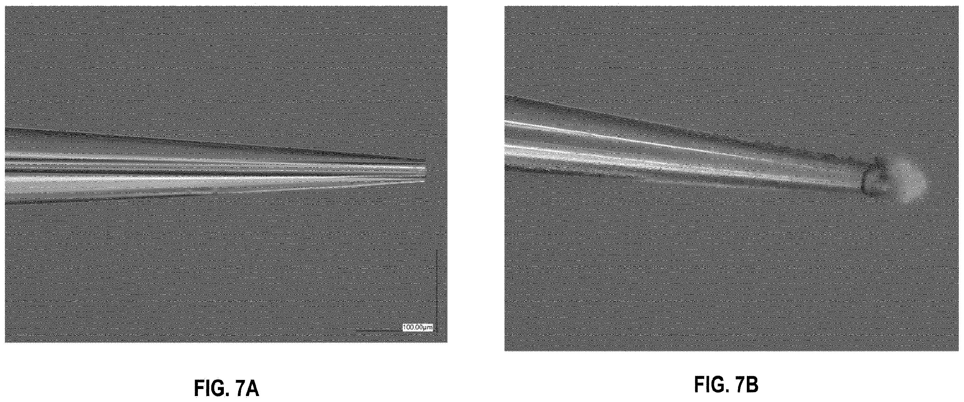

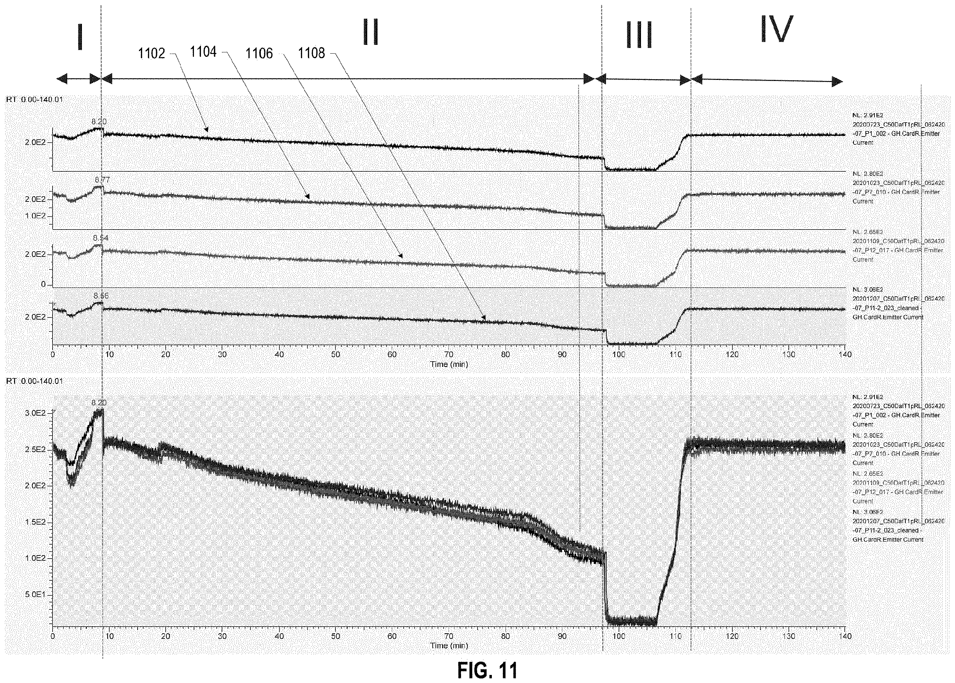

FIGS. 7A and 7B each depict an electrospray emitter. FIG. 7A depicts a new electrospray emitter while FIG. 7B depicts the electrospray emitter after it was subjected to several days of operation where the liquid flow was turned off and the voltage (2000 V) remained on. As shown in FIG. 7B a significant deposition occurred on the tip during use. Such deposition affects the liquid meniscus and is expected to increase the onset voltage. Bidirectional communication does not exist on every LC/MS pair. Thus, a timeout feature that turns off the high voltage to the mass spectrometer when the current is below a threshold for a specified duration when under method control would prevent this situation. Importantly, the timeout should be longer than the duration set for the column wash step (see region III in FIG. 11) where the current often is relatively low. In some embodiments, the described system shut off high voltage to the mass spectrometer based on the lack of an emitter current over a set duration.

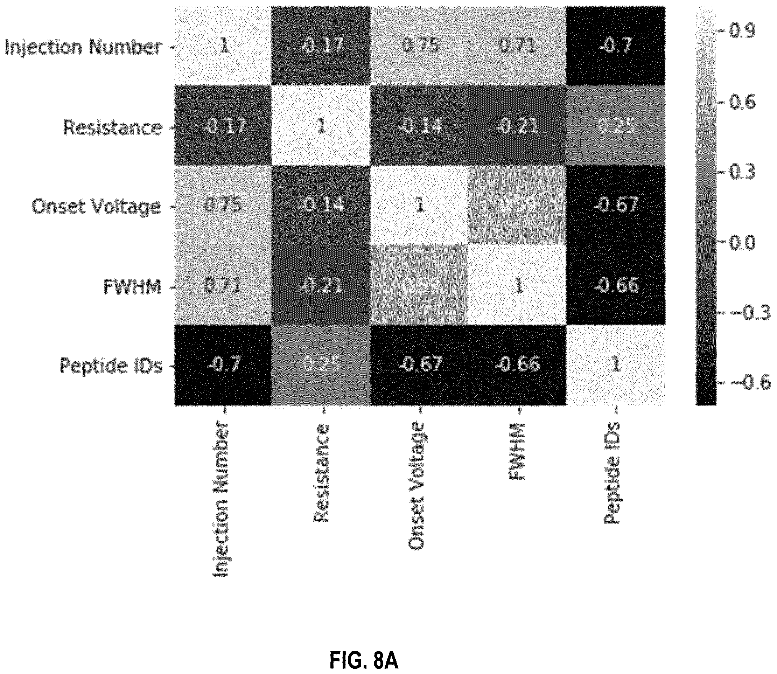

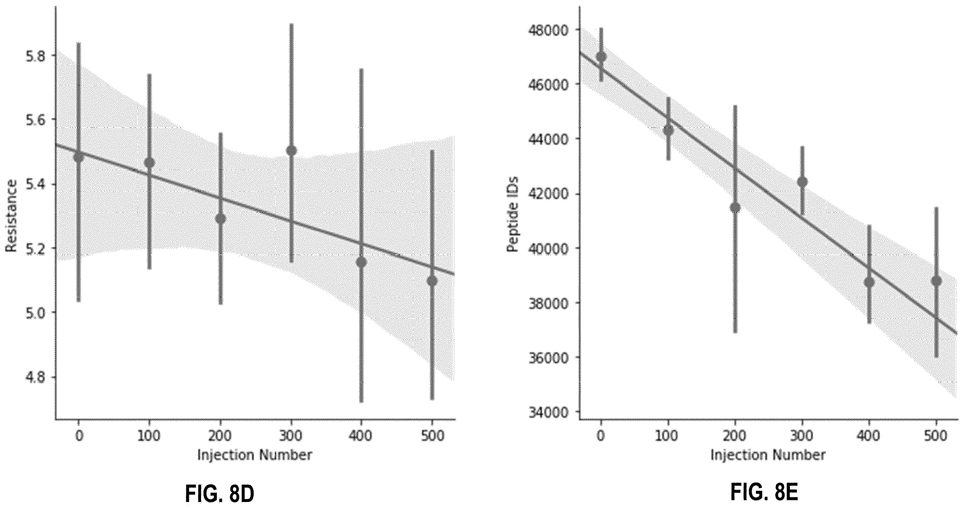

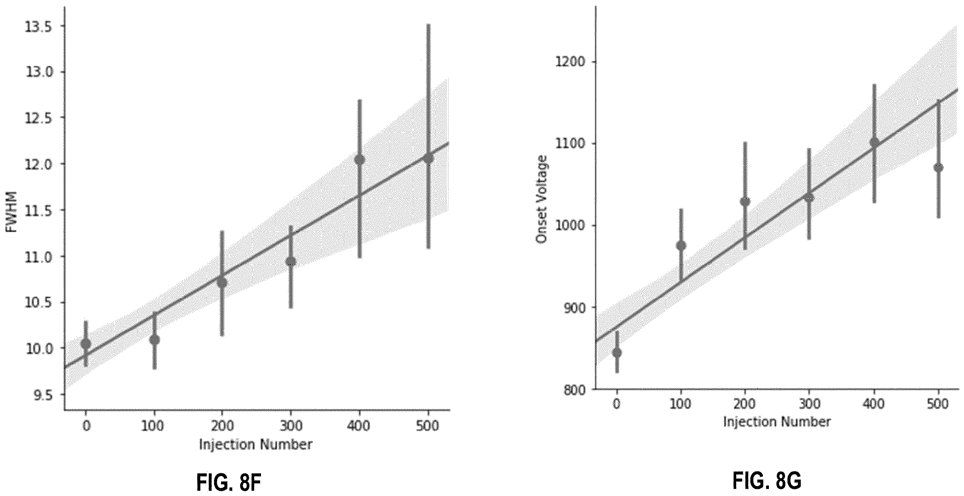

FIG. 8A depicts a heatmap showing the correlation coefficients from a linear regression analysis of factors that impact cartridge performance. As depicted, peptide identification represents the performance metric. Notably, injection number, onset voltage, and analyte peak width (FWHM) are all strongly inversely correlated with performance whereas resistivity in the emitter fluidic path was not found to be significantly correlated with performance.

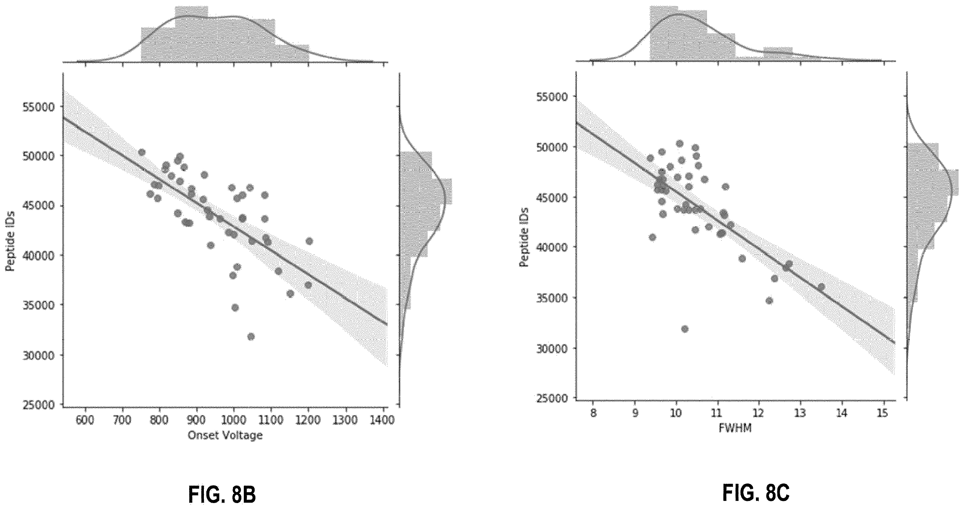

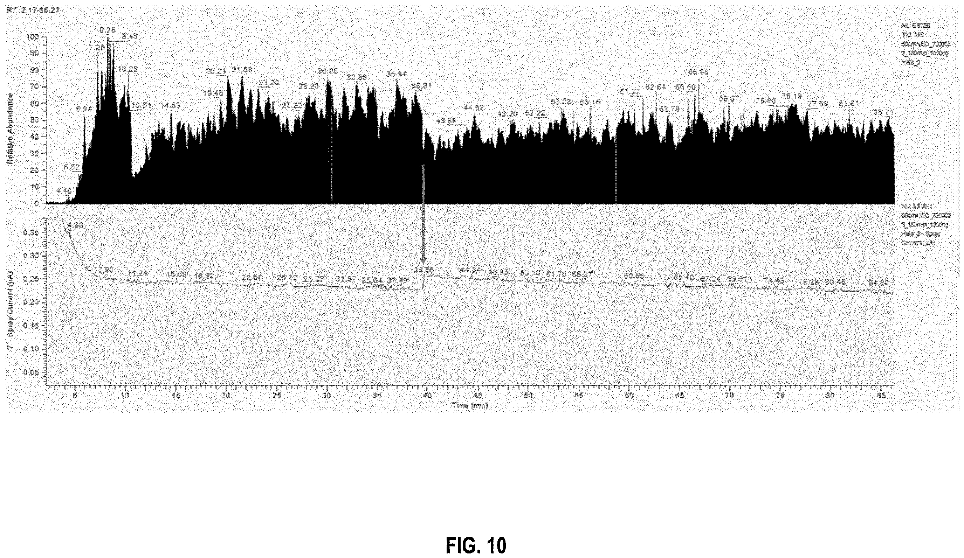

FIGS. 8B and 8C shows a linear regression analysis of onset voltage (FIG. 8B) and peak width (FIG. 8C) with performance. FIGS. 8D-8G each depict a chart showing diagnostic results for various cartridge components, which are depicted as a function of the number of injections. Peptide identifications were measured by injecting 200 ng HeLa on a Orbitrap Fusion Lumos mass spectrometer equipped with FAIMS and performing data dependent analysis. Peptides were separated using a 90 min gradient program. Raw files were searched with Sequest with a 1% false discovery rate using Percolator. The onset voltage as an indication of emitter health has been described in FIGS. 6A-6F. However, the data shown in FIG. 8C shows that peak width also plays a significant role. In some examples, measurement of peak width may be accomplished using either (1) an internal standard or (2) a separate method where a specific calibration mixture (e.g., PRTC) is injected in between sample runs, to establish (with a shortened gradient program that may also serve as a blank run to wash the column) if the LC/MS system and cartridge are collectively behaving as expected. Metrics may include column back pressure consistency between sample injections (see FIG. 11), the spray current (see FIG. 10), the stability of the retention time, peak areas, and the peak width of certain known MS signals. If a separate method is used, carryover (the abundance or other unknown species relative to PRTC) may also be assessed.

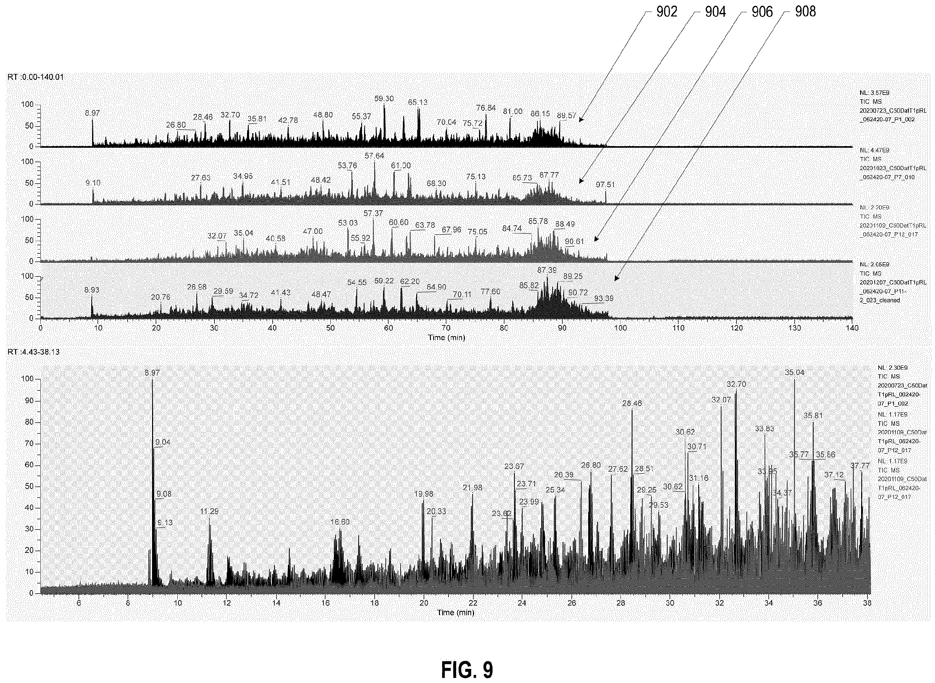

FIG. 9 depicts a chart showing the TIC as a function of retention time with cartridge #2 (injection 0 902, Injection 100 904, Injection 200 906, Injection 200 after cleaning 908). Notably, loss in sensitivity was observed at 200 injections for hydrophilic peptides. For the tested cartridge, the onset voltage data from the I-V curve (see FIGS. 6A-6C) would have predicted the low performance observed.

FIG. 10 depicts a chart showing an example of spray current detecting instability in the TIC during the gradient. The TIC is shown as a function of retention time. Notably, loss in sensitivity was observed during the analysis at ~40 mins which coincided with a sharp deviation in the spray current.

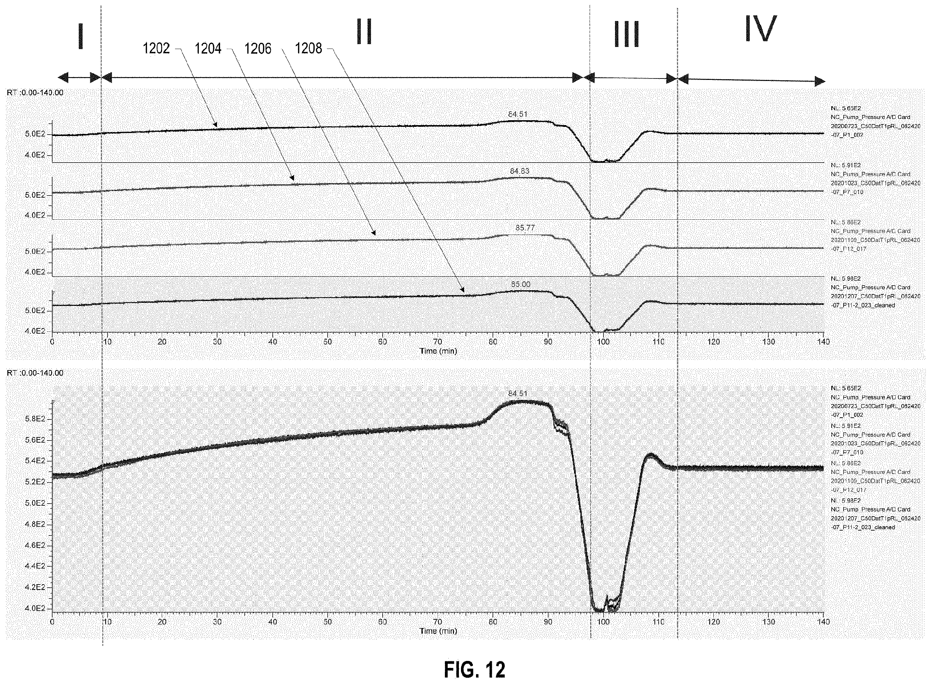

FIG. 11 depicts a chart showing spray current as a function of retention time for cartridge #2 (injection 0 1102, Injection 100 1104, Injection 200 1106, Injection 200 after cleaning 1108). FIG. 12. depicts a chart showing backpressure trends as a function of retention time for cartridge #2 (injection 0 1202, Injection 100 1204, Injection 200 1206, Injection 200 after cleaning 1208). Discrete regions are shown in both FIGS. 11 and 12. Region I corresponds to the dead time in the system (the time between the autosampler value switching from the load to inject position). Region II corresponds to delivery of the gradient and elution of analytes. Because the organic composition is progressively increased, the conductivity of the overall solvent is reduced, and the spray current is decreased. Region III corresponds to the column wash where any undigested peptidic species or hydrophobic contaminants are eluted off the column. Finally, region IV corresponds to equilibration of the column for a subsequent injection in the sequence. In the data shown above, no spray dropouts are observed indicating good spray stability.

The scientific instrument support methods disclosed herein may include interactions with a human user (e.g., via the user local computing device 5020 discussed herein with reference to FIG. 15). These interactions may include providing information to the user (e.g., information regarding the operation of a scientific instrument such as the scientific instrument 5010 of FIG. 15, information regarding a sample being analyzed or other test or measurement performed by a scientific instrument, information retrieved from a local or remote database, or other information) or providing an option for a user to input commands (e.g., to control the operation of a scientific instrument such as the scientific instrument 5010 of FIG. 15, or to control the analysis of data generated by a scientific instrument), queries (e.g., to a local or remote database), or other information. In some embodiments, these interactions may be performed through a graphical user interface (GUI) that includes a visual display on a display device (e.g., the display device 4010 discussed herein with reference to FIG. 14) that provides outputs to the user and/or prompts the user to provide inputs (e.g., via one or more input devices, such as a keyboard, mouse, trackpad, or touchscreen, included in the other I/O devices 4012 discussed herein with reference to FIG. 14). The scientific instrument support systems disclosed herein may include any suitable GUIs for interaction with a user.

FIG. 13 depicts an example GUI 3000 that may be used in the performance of some or all of the support methods disclosed herein, in accordance with various embodiments. As noted above, the GUI 3000 may be provided on a display device (e.g., the display device 4010 discussed herein with reference to FIG. 14) of a computing device (e.g., the computing device 4000 discussed herein with reference to FIG. 14) of a scientific instrument support system (e.g., the scientific instrument support system 5000 discussed herein with reference to FIG. 15), and a user may interact with the GUI 3000 using any suitable input device (e.g., any of the input devices included in the other I/O devices 4012 discussed herein with reference to FIG. 14) and input technique (e.g., movement of a cursor, motion capture, facial recognition, gesture detection, voice recognition, actuation of buttons, etc.).

The GUI 3000 may include a data display region 3002, a data analysis region 3004, a scientific instrument control region 3006, and a settings region 3008. The particular number and arrangement of regions depicted in FIG. 13 is simply illustrative, and any number and arrangement of regions, including any desired features, may be included in a GUI 3000. The data display region 3002 may display data generated by a scientific instrument (e.g., the scientific instrument 5010 discussed herein with reference to FIG. 15).

The data analysis region 3004 may display the results of data analysis (e.g., the results of analyzing the data illustrated in the data display region 3002 and/or other data). For example, the data analysis region 3004 may display state information that includes the configuration/type (e.g., the sweep cap type) or health/cleanliness of the instrumentation determined by system processing image data through a trained state model. In some embodiments, the data display region 3002 and the data analysis region 3004 may be combined in the GUI 3000 (e.g., to include data output from a scientific instrument, and some analysis of the data, in a common graph or region).

The scientific instrument control region 3006 may include options that allow the user to control a scientific instrument (e.g., the scientific instrument 5010 discussed herein with reference to FIG. 15). The settings region 3008 may include options that allow the user to control the features and functions of the GUI 3000 (and/or other GUIs) and/or perform common computing operations with respect to the data display region 3002 and data analysis region 3004 (e.g., saving data on a storage device, such as the storage device 4004 discussed herein with reference to FIG. 14, sending data to another user, labeling data, etc.).

As noted above, the scientific instrument support module 1000 may be implemented by one or more computing devices. FIG. 14 is a block diagram of a computing device 4000 that may perform some or all of the scientific instrument support methods disclosed herein, in accordance with various embodiments. In some embodiments, the scientific instrument support module 1000 may be implemented by a single computing device 4000 or by multiple computing devices 4000. Further, as discussed below, a computing device 4000 (or multiple computing devices 4000) that implements the scientific instrument support module 1000 may be part of one or more of the scientific instrument 5010, the user local computing device 5020, the service local computing device 5030, or the remote computing device 5040 of FIG. 15.

The computing device 4000 of FIG. 14 is illustrated as having a number of components, but any one or more of these components may be omitted or duplicated, as suitable for the application and setting. In some embodiments, some or all of the components included in the computing device 4000 may be attached to one or more motherboards and enclosed in a housing (e.g., including plastic, metal, and/or other materials). In some embodiments, some these components may be fabricated onto a single system-on-a-chip (SoC) (e.g., an SoC may include one or more processing devices 4002 and one or more storage devices 4004). Additionally, in various embodiments, the computing device 4000 may not include one or more of the components illustrated in FIG. 14, but may include interface circuitry (not shown) for coupling to the one or more components using any suitable interface (e.g., a Universal Serial Bus (USB) interface, a High-Definition Multimedia interface (HDMI) interface, a Controller Area Network (CAN) interface, a Serial Peripheral interface (SPI) interface, an Ethernet interface, a wireless interface, or any other appropriate interface) . For example, the computing device 4000 may not include a display device 4010, but may include display device interface circuitry (e.g., a connector and driver circuitry) to which a display device 4010 may be coupled.

The computing device 4000 may include a processing device 4002 (e.g., one or more processing devices). As used herein, the term "processing device" may refer to any device or portion of a device that processes electronic data from registers and/or memory to transform that electronic data into other electronic data that may be stored in registers and/or memory. The processing device 4002 may include one or more digital signal processors (DSPs), application-specific integrated circuits (ASICs), central processing units (CPUs), graphics processing units (GPUs), cryptoprocessors (specialized processors that execute cryptographic algorithms within hardware), server processors, or any other suitable processing devices.

The computing device 4000 may include a storage device 4004 (e.g., one or more storage devices). The storage device 4004 may include one or more memory devices such as random access memory (RAM) (e.g., static RAM (SRAM) devices, magnetic RAM (MRAM) devices, dynamic RAM (DRAM) devices, resistive RAM (RRAM) devices, or conductive-bridging RAM (CBRAM) devices), hard drive-based memory devices, solid-state memory devices, networked drives, cloud drives, or any combination of memory devices. In some embodiments, the storage device 4004 may include memory that shares a die with a processing device 4002. In such an embodiment, the memory may be used as cache memory and may include embedded dynamic random access memory (eDRAM) or spin transfer torque magnetic random access memory (STT-MRAM), for example. In some embodiments, the storage device 4004 may include non-transitory computer readable media having instructions thereon that, when executed by one or more processing devices (e.g., the processing device 4002), cause the computing device 4000 to perform any appropriate ones of or portions of the methods disclosed herein.

The computing device 4000 may include an interface device 4006 (e.g., one or more interface devices 4006). The interface device 4006 may include one or more communication chips, connectors, and/or other hardware and software to govern communications between the computing device 4000 and other computing devices. For example, the interface device 4006 may include circuitry for managing wireless communications for the transfer of data to and from the computing device 4000. The term "wireless" and its derivatives may be used to describe circuits, devices, systems, methods, techniques, communications channels, and the like., that may communicate data through the use of modulated electromagnetic radiation through a nonsolid medium. The term does not imply that the associated devices do not contain any wires, although in some embodiments they might not. Circuitry included in the interface device 4006 for managing wireless communications may implement any of a number of wireless standards or protocols, including but not limited to Institute for Electrical and Electronic Engineers (IEEE) standards including Wi-Fi (IEEE 802.11 family), IEEE 802.16 standards (e.g., IEEE 802.16-2005 Amendment), Long-Term Evolution (LTE) project along with any amendments, updates, and/or revisions (e.g., advanced LTE project, ultra-mobile broadband (UMB) project (also referred to as "3GPP2"), etc.). In some embodiments, circuitry included in the interface device 4006 for managing wireless communications may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. In some embodiments, circuitry included in the interface device 4006 for managing wireless communications may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). In some embodiments, circuitry included in the interface device 4006 for managing wireless communications may operate in accordance with Code Division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. In some embodiments, the interface device 4006 may include one or more antennas (e.g., one or more antenna arrays) to receipt and/or transmission of wireless communications.

In some embodiments, the interface device 4006 may include circuitry for managing wired communications, such as electrical, optical, or any other suitable communication protocols. For example, the interface device 4006 may include circuitry to support communications in accordance with Ethernet technologies. In some embodiments, the interface device 4006 may support both wireless and wired communication, and/or may support multiple wired communication protocols and/or multiple wireless communication protocols. For example, a first set of circuitry of the interface device 4006 may be dedicated to shorter-range wireless communications such as Wi-Fi or Bluetooth, and a second set of circuitry of the interface device 4006 may be dedicated to longer-range wireless communications such as global positioning system (GPS), EDGE, GPRS, CDMA, WiMAX, LTE, EV-DO, or others. In some embodiments, a first set of circuitry of the interface device 4006 may be dedicated to wireless communications, and a second set of circuitry of the interface device 4006 may be dedicated to wired communications.

The computing device 4000 may include battery/power circuitry 4008. The battery/power circuitry 4008 may include one or more energy storage devices (e.g., batteries or capacitors) and/or circuitry for coupling components of the computing device 4000 to an energy source separate from the computing device 4000 (e.g., AC line power).

The computing device 4000 may include a display device 4010 (e.g., multiple display devices). The display device 4010 may include any visual indicators, such as a heads-up display, a computer monitor, a projector, a touchscreen display, a liquid crystal display (LCD), a light-emitting diode display, or a flat panel display.

The computing device 4000 may include other input/output (I/O) devices 4012. The other I/O devices 4012 may include one or more audio output devices (e.g., speakers, headsets, earbuds, alarms, etc.), one or more audio input devices (e.g., microphones or microphone arrays), location devices (e.g., GPS devices in communication with a satellite-based system to receive a location of the computing device 4000, as known in the art), audio codecs, video codecs, printers, sensors (e.g., thermocouples or other temperature sensors, humidity sensors, pressure sensors, vibration sensors, accelerometers, gyroscopes, etc.), image capture devices such as cameras, keyboards, cursor control devices such as a mouse, a stylus, a trackball, or a touchpad, bar code readers, Quick Response (QR) code readers, or radio frequency identification (RFID) readers, for example.

The computing device 4000 may have any suitable form factor for its application and setting, such as a handheld or mobile computing device (e.g., a cell phone, a smart phone, a mobile internet device, a tablet computer, a laptop computer, a netbook computer, an ultrabook computer, a personal digital assistant (PDA), an ultra-mobile personal computer, etc.), a desktop computing device, or a server computing device or other networked computing component.

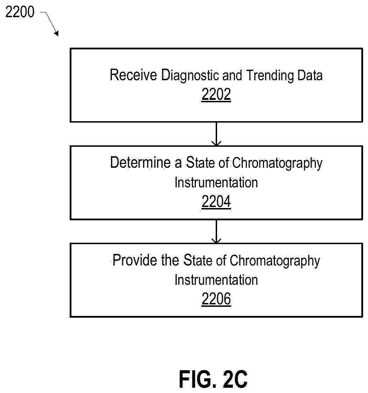

One or more computing devices implementing any of the scientific instrument support modules or methods disclosed herein may be part of a scientific instrument support system. FIG. 15 is a block diagram of an example scientific instrument support system 5000 in which some or all of the scientific instrument support methods disclosed herein may be performed, in accordance with various embodiments. The scientific instrument support modules and methods disclosed herein (e.g., the scientific instrument support module 1000 of FIG. 1 and the method 2000 of FIG. 2) may be implemented by one or more of the scientific instrument 5010, the user local computing device 5020, the service local computing device 5030, or the remote computing device 5040 of the scientific instrument support system 5000.

Any of the scientific instrument 5010, the user local computing device 5020, the service local computing device 5030, or the remote computing device 5040 may include any of the embodiments of the computing device 4000 discussed herein with reference to FIG. 14, and any of the scientific instrument 5010, the user local computing device 5020, the service local computing device 5030, or the remote computing device 5040 may take the form of any appropriate ones of the embodiments of the computing device 4000 discussed herein with reference to FIG. 14.

The scientific instrument 5010, the user local computing device 5020, the service local computing device 5030, or the remote computing device 5040 may each include a processing device 5002, a storage device 5004, and an interface device 5006. The processing device 5002 may take any suitable form, including the form of any of the processing devices 4002 discussed herein with reference to FIG. 4, and the processing devices 5002 included in different ones of the scientific instrument 5010, the user local computing device 5020, the service local computing device 5030, or the remote computing device 5040 may take the same form or different forms. The storage device 5004 may take any suitable form, including the form of any of the storage devices 5004 discussed herein with reference to FIG. 4, and the storage devices 5004 included in different ones of the scientific instrument 5010, the user local computing device 5020, the service local computing device 5030, or the remote computing device 5040 may take the same form or different forms. The interface device 5006 may take any suitable form, including the form of any of the interface devices 4006 discussed herein with reference to FIG. 4, and the interface devices 5006 included in different ones of the scientific instrument 5010, the user local computing device 5020, the service local computing device 5030, or the remote computing device 5040 may take the same form or different forms.

The scientific instrument 5010, the user local computing device 5020, the service local computing device 5030, and the remote computing device 5040 may be in communication with other elements of the scientific instrument support system 5000 via communication pathways 5008. The communication pathways 5008 may communicatively couple the interface devices 5006 of different ones of the elements of the scientific instrument support system 5000, as shown, and may be wired or wireless communication pathways (e.g., in accordance with any of the communication techniques discussed herein with reference to the interface devices 4006 of the computing device 4000 of FIG. 14). The particular scientific instrument support system 5000 depicted in FIG. 15 includes communication pathways between each pair of the scientific instrument 5010, the user local computing device 5020, the service local computing device 5030, and the remote computing device 5040, but this "fully connected" implementation is simply illustrative, and in various embodiments, various ones of the communication pathways 5008 may be absent. For example, in some embodiments, a service local computing device 5030 may not have a direct communication pathway 5008 between its interface device 5006 and the interface device 5006 of the scientific instrument 5010, but may instead communicate with the scientific instrument 5010 via the communication pathway 5008 between the service local computing device 5030 and the user local computing device 5020 and the communication pathway 5008 between the user local computing device 5020 and the scientific instrument 5010.

The scientific instrument 5010 may include any appropriate scientific instrument. In some embodiments, the scientific instrument 5010 includes a mass spectrometer 5012, a liquid chromatograph 5014, an ion source 5016, a cartridge 5018, and an imagine device 5019. Generally, the mass spectrometer 5012 is a device that is used to analyzing ions (e.g., measure the mass-to-charge ratio of ions). In some embodiments, a high voltage power supply is located in the ion source 5016. The mass spectrometer 5012 is in communication with the ion source 5016. Generally, the liquid chromatograph 5014 contains an autosampler for introducing the sample to the chromatographic column (stationary phase) and a high-pressure pump for delivering a mobile phase to elute the sample from the column as a function of time.

Generally, the ion source 5016 represents the LC/MS interface responsible for generating gas-phase ions from the liquid stream eluting from the chromatographic column for subsequent analysis in the mass spectrometer. In some embodiments, the ion source 5016 functions as a mount for the cartridge 5018 near the inlet of the mass spectrometer 5012.

Generally, the cartridge 5018 is the functional component of the ion source 5016 and principally includes a chromatography column and an electrospray emitter. In some embodiments, high voltage is applied to the liquid stream to generate an electrospray. In some embodiments, nebulization gas is applied to assist the electrospray plume and aid in stability. In some embodiments, the column may be maintained in a thermally controlled environment (e.g., heated or cooled), depending on the type of chromatography practiced. The storage device 5004 is employed to store historic and diagnostic data. In some embodiments, the storage device 5004 is included on or attached to the cartridge.

Generally, the imaging device (e.g., a camera) 5019 is employed for imaging the electrospray emitter and inlet. In some embodiments, the imaging device 5019 includes a light-emitting diode (LED) that is employed for imaging the electrospray. In some embodiments, the imaging device 5019 is in communication with cartridge. In some embodiments, the imaging device 5019 communicates bi-directionally with the mass spectrometer 5012.

The user local computing device 5020 may be a computing device (e.g., in accordance with any of the embodiments of the computing device 4000 discussed herein) that is local to a user of the scientific instrument 5010. In some embodiments, the user local computing device 5020 may also be local to the scientific instrument 5010, but this need not be the case; for example, a user local computing device 5020 that is in a user's home or office may be remote from, but in communication with, the scientific instrument 5010 so that the user may use the user local computing device 5020 to control and/or access data from the scientific instrument 5010. In some embodiments, the user local computing device 5020 may be a laptop, smartphone, or tablet device. In some embodiments the user local computing device 5020 may be a portable computing device.

The service local computing device 5030 may be a computing device (e.g., in accordance with any of the embodiments of the computing device 4000 discussed herein) that is local to an entity that services the scientific instrument 5010. For example, the service local computing device 5030 may be local to a manufacturer of the scientific instrument 5010 or to a third-party service company. In some embodiments, the service local computing device 5030 may communicate with the scientific instrument 5010, the user local computing device 5020, and/or the remote computing device 5040 (e.g., via a direct communication pathway 5008 or via multiple "indirect" communication pathways 5008, as discussed above) to receive data regarding the operation of the scientific instrument 5010, the user local computing device 5020, and/or the remote computing device 5040 (e.g., the results of self-tests of the scientific instrument 5010, calibration coefficients used by the scientific instrument 5010, the measurements of sensors associated with the scientific instrument 5010, etc.). In some embodiments, the service local computing device 5030 may communicate with the scientific instrument 5010, the user local computing device 5020, and/or the remote computing device 5040 (e.g., via a direct communication pathway 5008 or via multiple "indirect" communication pathways 5008, as discussed above) to transmit data to the scientific instrument 5010, the user local computing device 5020, and/or the remote computing device 5040 (e.g., to update programmed instructions, such as firmware, in the scientific instrument 5010, to initiate the performance of test or calibration sequences in the scientific instrument 5010, to update programmed instructions, such as software, in the user local computing device 5020 or the remote computing device 5040, etc.). A user of the scientific instrument 5010 may utilize the scientific instrument 5010 or the user local computing device 5020 to communicate with the service local computing device 5030 to report a problem with the scientific instrument 5010 or the user local computing device 5020, to request a visit from a technician to improve the operation of the scientific instrument 5010, to order consumables or replacement parts associated with the scientific instrument 5010, or for other purposes.

The remote computing device 5040 may be a computing device (e.g., in accordance with any of the embodiments of the computing device 4000 discussed herein) that is remote from the scientific instrument 5010 and/or from the user local computing device 5020. In some embodiments, the remote computing device 5040 may be included in a datacenter or other large-scale server environment. In some embodiments, the remote computing device 5040 may include network-attached storage (e.g., as part of the storage device 5004). The remote computing device 5040 may store data generated by the scientific instrument 5010, perform analyses of the data generated by the scientific instrument 5010 (e.g., in accordance with programmed instructions), facilitate communication between the user local computing device 5020 and the scientific instrument 5010, and/or facilitate communication between the service local computing device 5030 and the scientific instrument 5010.

In some embodiments, one or more of the elements of the scientific instrument support system 5000 illustrated in FIG. 15 may not be present. Further, in some embodiments, multiple ones of various ones of the elements of the scientific instrument support system 5000 of FIG. 15 may be present. For example, a scientific instrument support system 5000 may include multiple user local computing devices 5020 (e.g., different user local computing devices 5020 associated with different users or in different locations). In another example, a scientific instrument support system 5000 may include multiple scientific instruments 5010, all in communication with service local computing device 5030 and/or a remote computing device 5040; in such an embodiment, the service local computing device 5030 may monitor these multiple scientific instruments 5010, and the service local computing device 5030 may cause updates or other information may be "broadcast" to multiple scientific instruments 5010 at the same time. Different ones of the scientific instruments 5010 in a scientific instrument support system 5000 may be located close to one another (e.g., in the same room) or farther from one another (e.g., on different floors of a building, in different buildings, in different cities, and the like.). In some embodiments, a scientific instrument 5010 may be connected to an Internet-of-Things (IoT) stack that allows for command and control of the scientific instrument 5010 through a web-based application, a virtual or augmented reality application, a mobile application, and/or a desktop application. Any of these applications may be accessed by a user operating the user local computing device 5020 in communication with the scientific instrument 5010 by the intervening remote computing device 5040. In some embodiments, a scientific instrument 5010 may be sold by the manufacturer along with one or more associated user local computing devices 5020 as part of a local scientific instrument computing unit 5012.

In some such embodiments, the remote computing device 5040 and/or the user local computing device 5020 may combine data from different types of scientific instruments 5010 included in a scientific instrument support system 5000.

The following paragraphs provide various examples of the embodiments disclosed herein.

Example 1 is a chromatography support apparatus including first logic to receive, from an imaging device, image data regarding chromatography instrumentation; second logic to determine a state of the chromatography instrumentation by processing the imaging device through a machine-learning computational model; and third logic to display the state of the chromatography instrumentation.

Example 2 includes the subject matter of Example 1, and further specifies that the machine-learning computational model determines qualitative changes in a behavior of the chromatography instrumentation based on FDA.

Example 3 includes the subject matter of any of Examples 1 and 2, and further specifies that the FDA employs the Fréchet distance, DTW distance, or a Euclidean distance determined from a cross-correlation.

Example 4 includes the subject matter of any of Examples 1-3, and further specifies that the state of the chromatography instrumentation includes the cleanliness of the chromatography instrumentation.

Example 5 includes the subject matter of any of Examples 1-4, and further specifies that the state of the chromatography instrumentation includes the health of the chromatography instrumentation comprising a collection of distributions of a solvent ion signal.

Example 6 includes the subject matter of any of Examples 1-5, and further specifies that the
chromatography instrumentation comprises a mass spectrometer inlet.

Example 7 includes the subject matter of any of Examples 1-6, and further specifies that the chromatography instrumentation comprises an electrospray emitter and a chromatographic column.

Example 8 includes the subject matter of any of Examples 1-7, and further specifies that the electrospray emitter is configured to emit an electrospray plume, and wherein the mass spectrometer inlet is configured to sample the electrospray plume.

Example 9 includes the subject matter of any of Examples 1-8, and further specifies that the chromatography instrumentation comprises a sweep cap having an annulus region surrounding the mass spectrometer inlet.

Example 10 includes the subject matter of any of Examples 1-9, and further specifies that the state of the chromatography instrumentation includes a type of the sweep cap or the type of the electrospray emitter.

Example 11 includes the subject matter of any of Examples 1-10, and further specifies that the annulus region is configured to provide a counter flow of gas.

Example 12 includes the subject matter of any of Examples 1-11, and further specifies that the machine-learning computational model comprises a trained neural network.

Example 13 includes the subject matter of any of Examples 1-12, and further specifies that the machine-learning computational model comprises a trained feed forward neural network.

Example 14 includes the subject matter of any of Examples 1-13, and further specifies that the imaging device comprises a camera.

Example 15 is a chromatography support apparatus including first logic to receive a command to train a machine-learning computational model, wherein the command includes an identification of multiple image data sets or diagnostic and trending data sets for training the machine-learning computational model; second logic to initially train the machine-learning computational model based on the multiple image data sets or the diagnostic and the trending data sets, wherein the machine-learning computational model is to output a state of the chromatography instrumentation; and third logic to provide, after initial training, an option to select the machine-learning computational model for application to a subsequent image data set or diagnostic and trending data set.

Example 16 includes the subject matter of Example 15, and further specifies that an input to the machine-learning computational model comprises a one-dimensional array of image data sets or diagnostic and trending data.

Example 17 includes the subject matter of any of Examples 15 and 16, and further specifies that the machine-learning computational model is a first machine-learning computational model, wherein the first logic is to receive a command to train a second machine-learning computational model, wherein the command includes an identification of multiple image data sets or the diagnostic and the trending data sets for training the second machine-learning computational model.

Example 18 includes the subject matter of any of Examples 15-17, and further specifies that the multiple image data sets or the diagnostic and the trending data sets used to train the second machine-learning computational model are different from the multiple image data sets or the diagnostic and the trending data sets used to train the first machine-learning computational model.

Example 19 includes the subject matter of any of Examples 15-18, and further specifies that the second logic is to provide a selection of which of multiple computational models, including the first machine-learning computational model and the second machine-learning computational model, to use to analyze a subsequent image data set or a subsequent diagnostic and trending data set.

Example 20 includes the subject matter of any of Examples 15-19, and further specifies that the second logic is also to provide selectable options for non-machine-learning computational models to apply to a subsequent image data set or a subsequent diagnostic and trending data set.

Example 21 is a chromatography support apparatus including first logic to receive diagnostic and trending data regarding chromatography instrumentation collected during operation of the chromatography instrumentation; second logic to determine a state of the chromatography instrumentation by processing the diagnostic and trending data through a machine-learning computational model; and third logic to display the state of the chromatography instrumentation.

Example 22 includes the subject matter of Example 21, and further specifies that the state of the chromatography instrumentation includes the health of the chromatography instrumentation.

Example 23 includes the subject matter of any of Examples 21 and 22, and further specifies that the state of the chromatography instrumentation is determined based on a peak width of analytes, stability of retention time, peak area, or carryover of other signals relative to analytes.

Example 24 includes the subject matter of Examples 21-23, and further includes: fourth logic to cause halting an operation of the chromatography instrumentation based on the state of the chromatography instrumentation.

## Claims

1. A chromatography support apparatus, comprising:
first logic to receive, from an imaging device, image data regarding chromatography instrumentation;
second logic to determine a state of the chromatography instrumentation by processing the imaging device through a machine-learning computational model; and
third logic to display the state of the chromatography instrumentation.

2. The chromatography support apparatus of claim 1, wherein the machine-learning computational model determines qualitative changes in a behavior of the chromatography instrumentation based on functional data analysis (FDA).

3. The chromatography support apparatus of claim 2, wherein the FDA employs the Fréchet distance, dynamic time warping (DTW) distance, or a Euclidean distance determined from a cross-correlation.

4. The chromatography support apparatus of claim 1, wherein the state of the chromatography instrumentation includes the cleanliness of the chromatography instrumentation.

5. The chromatography support apparatus of claim 1, wherein the state of the chromatography instrumentation includes the health of the chromatography instrumentation comprising a collection of distributions of a solvent ion signal.

6. The chromatography support apparatus of claim 1, wherein the chromatography instrumentation comprises a mass spectrometer inlet.

7. The chromatography support apparatus of claim 6, wherein the chromatography instrumentation comprises an electrospray emitter and a chromatographic column.

8. The chromatography support apparatus of claim 7, wherein the electrospray emitter is configured to emit an electrospray plume, and wherein the mass spectrometer inlet is configured to sample the electrospray plume.

9. The chromatography support apparatus of claim 7, wherein the chromatography instrumentation comprises a sweep cap having an annulus region surrounding the mass spectrometer inlet.

10. The chromatography support apparatus of claim 9, wherein the state of the chromatography instrumentation includes a type of the sweep cap or the type of the electrospray emitter.

11. The chromatography support apparatus of claim 9, wherein the annulus region is configured to provide a counter flow of gas.
